# EUROPÄISCHE PATENTSCHRIFT

(11) **EP 0 650 565 B1**
(45) Veröffentlichungstag und Bekanntmachung des Hinweises auf die Patenterteilung: **11.06.1997**
(21) Anmeldenummer: 93915877.0
(22) Anmeldetag: 10.07.1993
(51) Int. Cl.: F16H 59/66, B60K 41/26

(54) **VERFAHREN ZUR ELEKTRONISCHEN STEUERUNG EINES AUTOMATISCHEN SCHALTGETRIEBES**
ELECTRONIC CONTROL PROCESS FOR AN AUTOMATIC GEAR BOX
PROCEDE DE COMMANDE ELECTRONIQUE D'UNE BOITE DE VITESSES AUTOMATIQUE

(30) Priorität: 14.07.1992 DE 4223084
(43) Veröffentlichungstag der Anmeldung: 03.05.1995
(73) Patentinhaber: ZF FRIEDRICHSHAFEN Aktiengesellschaft, 88038 Friedrichshafen (DE)
(72) Erfinder: WENDEL, Peter, D-88079 Kressbronn (DE)
(86) Internationale Anmeldenummer: EP9301815
(87) Internationale Veröffentlichungsnummer: WO9401701

(56) Entgegenhaltungen:
- US-A- 4 363 389
- US-A- 4 513 639
- US-A- 4 648 289
- US-A- 4 804 074
- US-A- 5 170 679

## Beschreibung

Die Erfindung betrifft ein Verfahren zur Steuerung eines automatischen Schaltgetriebes nach dem Oberbegriff des ersten Anspruchs.

Bei Fahrzeugen mit Automatgetrieben beginnt in vielen Fällen mit Einlegen der Fahrposition und Motorleerlauf das Fahrzeug zu kriechen, weil der Motor an das Getriebe ein Moment abgibt, auch wenn kein Gaspedal betätigt ist. In diesem Zusammenhang ist aus der DE-A-41 18 474 ist eine Anti-Kriechsteuerung für ein automatisches Fahrzeuggetriebe bekannt. Wenn Fahrzeuggeschwindigkeit und Öffnungswinkel des Motordrosselventils Null oder nahezu Null sind und die Bremse betätigt wird, wird die Drehmomentübertragung unterbrochen oder gemindert. Die Anti-Kriechsteuerung bleibt aktiviert, solange der Motor im Leerlauf läuft und das Fahrzeug angehalten bleibt, auch wenn das Bremssystem gelöst wird.

Aus der US-A-4,804,074 wiederum ist eine Steuervorrichtung bekannt, bei der, ausgehend von der Fahrzeug-Neigung, das von einer Anfahrkupplung übertragbare Moment derart gesteuert wird, daß das Fahrzeug an einer Steigung bei Stillstand nicht zurückrollt.

Ausgehend von dem beschriebenen Stand der Technik hat die Erfindung zur Aufgabe, für ein Fahrzeug mit Automatgetriebe die Anti-Kriechsteuerung weiterzuentwickeln.

Die Aufgabe wird gemäß dem Anspruch 1 dadurch gelöst, daß die Verteilung der Beladung erfaßt und zur Korrektur der Neigung des Fahrzeuges verwendet wird.

Die Beladung bewirkt gegenüber dem unbeladenen Fahrzeug eine Änderung der Achslast. Die Verteilung der Last ist unterschiedlich auf Vorder- und Hinterachse. Dadurch verändert sich die Neigung des Fahrzeugs und verursacht eine Signal-Verfälschung des Neigungssensors. Diese Fehlinformation bewirkt, daß ein höheres Schleppmoment eingestellt wird. Korrigiert wird die Fehlinformation durch ein Signal, das eine Funktion der Fahrzeugbeladung darstellt. Als Maß für den Beladungszustand des Fahrzeugs kann gemäß Anspruch 2 das Signal der Leuchtweitenregulierung der Fahrzeugscheinwerfer oder gemäß Anspruch 3 das Signal der Fahrzeug-Niveauregulierung verwendet werden. Gemäß Anspruch 4 können auch ebenfalls Sensoren, die den Abstand des Fahrzeugs von der Fahrbahn messen, verwendet werden.

Gemäß der Erfindung ist es selbstverständlich auch möglich, das durch die Kupplung übertragbare Moment derart einzustellen, daß die Einflüsse aus Neigung und Beladung überkompensiert werden. Hierdurch wird ein geringes Kriechen bewirkt, was wiederum dem Fahrer anzeigt, daß eine Fahrposition noch eingelegt ist.

In der Zeichnung ist ein Ausführungsbeispiel dargestellt.
Es zeigen:
- Fig. 1: als Blockschaltbild den Aufbau der Steuerungseinrichtung;
- Fig. 2: den Ablaufplan für das Programm der Standabkopplung.

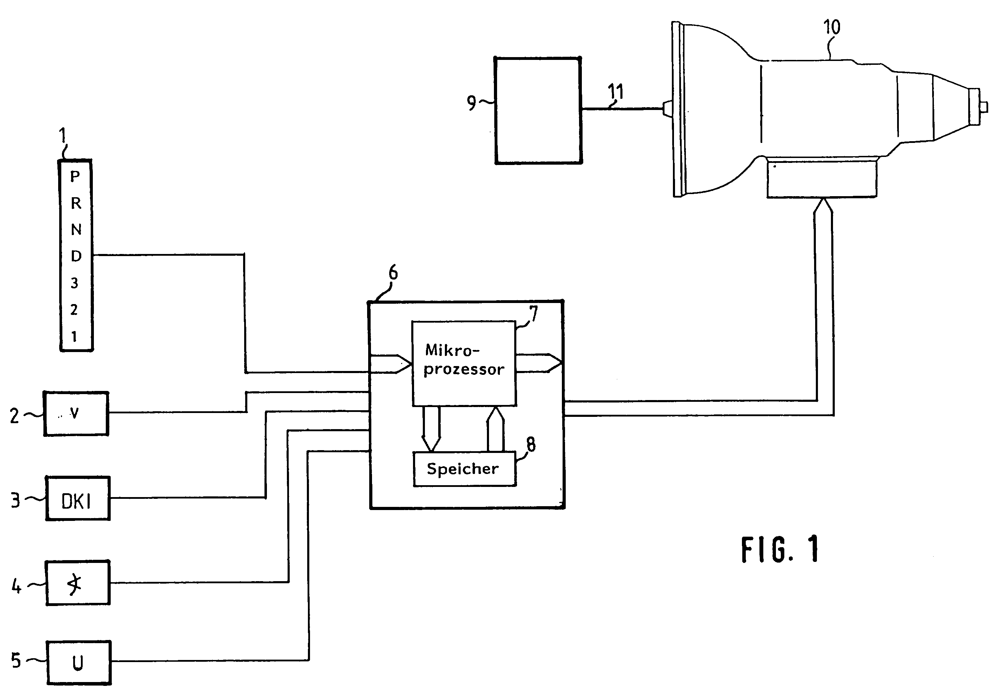

Fig. 1 zeigt ein Automatgetriebe 10, das mit einem Motor 9 durch eine Antriebswelle 11 verbunden ist. Das Getriebe 10 besitzt nicht dargestellte Kupplungen, deren Momentenübertragung durch nicht dargestellte, elektrisch hydraulische Stellglieder bestimmt wird. Angesteuert werden diese Stellglieder durch ein elektronisches Steuergerät 6, das neben einem Mikroprozessor 7 zur Signalverarbeitung auch über einen Speicher 8 verfügt, in dem die Zuordnungsvorschrift Fahrzeugbeladung, Fahrzeugneigung zu Kupplungsdruck abgelegt ist. Eingangsgröße für das elektronische Steuergerät 6 ist ein Signal von einem Fahrbereichschalter 1, das Signal v von einem Drehzahlsensor 2, welches für die Fahrzeugeschwindigkeit steht, das Signal DKI von einem Motordrosselklappenventil 3, das Signal von einem Neigungssensor 4, das Signal einer Fahrzeug-Leuchtweitenregulierung oder Fahrzeug-Niveauregulierung oder die Signale von Abstandssensoren 5.

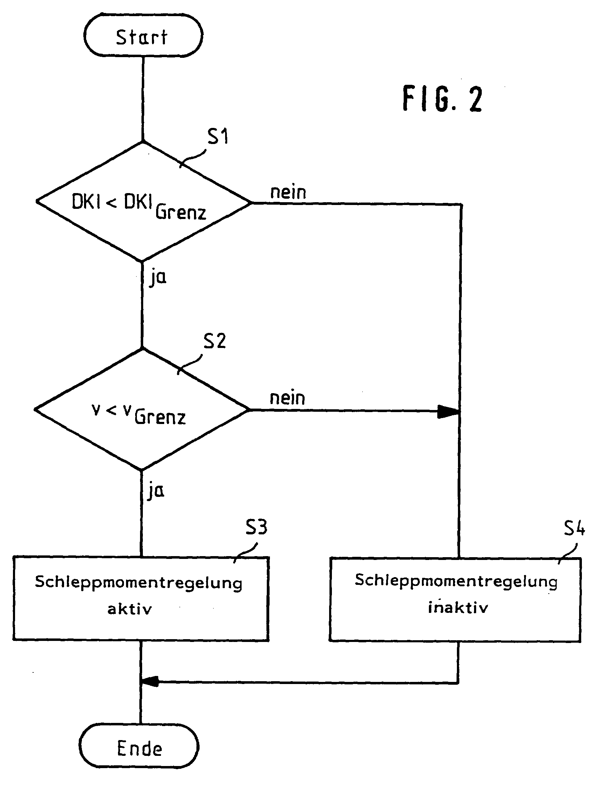

Fig. 2 zeigt das Ablaufschema des Programms Standabkopplung. Mit Einlegen einer Fahrstufe wird das Programm aktiviert. Schritt S1 prüft, ob der aktuelle Drosselklappenwert DKI kleiner als ein vorgegebener Grenzwert DKI-GRENZ ist. Schritt S2 prüft, ob die aktuelle Fahrzeuggeschwindigkeit v kleiner einem Grenzwert v-GRENZ ist. Beide Grenzwerte liegen bei Null oder nahezu Null. Bei folgenden Fahrzuständen sind die Abfragen von S1 und S2 positiv erfüllt: Abbremsen oder Ausrollen des Fahrzeugs kurz vor dem Stillstand, z. B., um vor einer Ampel anzuhalten. Fahrzeug festgebremst, z. B. bei einem Ampelstopp. Sind die Abfragen von S1 und S2 positiv erfüllt, so wird die Schleppmomentregelung als Schritt S3 ausgeführt. Ist eine der beiden Bedingungen nicht erfüllt, unterbleibt bei Schritt S4 eine Schleppmomentregelung. Dadurch werden alle anderen Fahrzustände erfaßt, z. B. Beschleunigen oder Anfahrvorgang, Abbremsen, Schubbetrieb bei Bergabfahrten. Bei diesen Fahrzuständen ist eine Schleppmomentregelung nicht sinnvoll.

Beendet wird die Schleppmomentregelung, wenn das Fahrzeug beschleunigt oder mit Verlassen der Fahrstufe. Das Programm bleibt aktiviert, auch wenn die Fahrzeuggeschwindigkeit und der Motordrosselklappenwert größer dem Grenzwert sind.

### Bezugszeichen

- 1: Fahrpositionsschalter
- 2: Geschwindigkeitssensor
- 3: Motordrosselklappensensor
- 4: Neigungssensor
- 5: Signal Leuchtweitenregulierung, Niveauregulierung oder Abstandssensoren
- 6: elektronisches Steuergerät
- 7: Mikroprozessor
- 8: Speicher
- 9: Motor
- 10: Getriebe
- 11: Antriebswelle Getriebe

- S1: Schritt
- S2: Schritt
- S3: Schritt
- S4: Schritt

## Patentansprüche

1. Verfahren zur elektronischen Steuerung eines automatischen Schaltgetriebes (10) in einem Fahrzeug mit Kupplungen, die durch einen Mikroprozessor (7) gesteuert werden, einem Fahrpositionsschalter (1), einem Sensor (2), der die Fahrzeuggeschwindigkeit erfaßt, einem Sensor (3), der den Motordrosselklappenwert erfaßt, einem Sensor (4), der die Neigung des Fahrzeugs erfaßt, der Mikroprozessor (7) bei einer Fahrgeschwindigkeit von Null oder nahezu Null und einem Motordrosselklappenwert von Null oder nahezu Null eine im Kraftfluß liegende Kupplung in der Art regelt, daß das übertragene Moment die aus der Neigung resultierenden Einflüsse ausgleicht, wobei in die Steuerung das Fahrzeuggewicht und die Beladung mit eingeht, dadurch **gekennzeichnet,** daß die Verteilung der Beladung erfaßt und zur Korrektur der Neigung des Fahrzeugs verwendet wird.

2. Verfahren nach Anspruch 1, dadurch **gekennzeichnet,** daß die beladungsabhängige Einstellung einer Fahrzeugbeleuchtung (5) als Maß für den Beladungszustand verwendet wird.

3. Verfahren nach Anspruch 1, dadurch **gekennzeichnet,** daß aus einer Niveauregulierung des Fahrzeugs ein Signal (5) für den Beladungszustand gewonnen wird.

4. Verfahren nach Anspruch 1, dadurch **gekennzeichnet,** daß die Neigung des Fahrzeugs zur Fahrbahn mit Abstandssensoren (5) bestimmt wird.

## Claims

1. A method for the electronic control of an automatic gearbox (10) in a vehicle comprising clutches controlled by a microprocessor (7), a drive position selector (1), a sensor (2) which detects the vehicle speed, a sensor (3) which detects the engine throttle setting, a sensor (4) which detects vehicle inclination, the microprocessor (7) regulating a clutch lying in the power flow path in such a way that, when the travel speed is zero or virtually zero and the engine throttle setting is zero or virtually zero, the transmitted torque balances the effects of inclination, wherein the vehicle weight and loading also influence control, characterised in that the load distribution is detected and used to correct the inclination of the vehicle.

2. A method according to claim 1, characterised in that load-dependent adjustment of vehicle lighting (5) is used as a measure of the load situation.

3. A method according to claim 1, characterised in that a signal (5) for the load situation is obtained from levelling of the vehicle.

4. A method according to claim 1, characterised in that the inclination of the vehicle with respect to the road is determined by distance sensors (5).

## Revendications

1. Procédé de commande électronique d'une boîte de vitesses automatique (10) dans un véhicule qui comporte des embrayages qui sont pilotés par un microprocesseur (7), un bouton de commande de la position de conduite (1), un capteur (2) qui détecte la vitesse du véhicule, un capteur (3) qui détecte la valeur angulaire du papillon du moteur, un capteur (4) qui détecte l'inclinaison du conducteur, le microprocesseur (7) étant agencé pour réguler un embrayage alimenté par un fluide sous pression, pour une vitesse effective du véhicule nulle ou voisine de zéro, et une valeur angulaire du papillon du moteur nulle ou voisine de zéro, telle que le couple transmis compense les effets résultant de l'inclinaison, la commande tenant compte du poids du véhicule et de sa charge, **caractérisé** en ce que l'on détecte la répartition de la charge pour corriger l'inclinaison du véhicule.

2. Procédé selon la revendication 1, **caractérisé** en ce que l'on utilise le réglage de l'éclairage (5) du véhicule, qui dépend de la charge comme mesure de l'état de charge.

3. Procédé selon la revendication 1, **caractérisé** en ce que l'on détermine un signal (5) de l'état de charge du véhicule à partir de la régulation de son niveau.

4. Procédé selon la revendication 1, **caractérisé** en ce que l'on détermine l'inclinaison du véhicule par rapport à la route au moyen de capteurs d'éloignement.
